# EUROPÄISCHE PATENTANMELDUNG

(11) **EP 2 453 055 A1**
(43) Veröffentlichungstag der Anmeldung: **16.05.2012**
(21) Anmeldenummer: 11008428.2
(22) Anmeldetag: 20.10.2011
(51) Int. Cl.: D06F 58/28, D06F 58/20

(54) **Wäschetrockner mit variablem Trockenluft-Volumenstrom und Verfahren zu dessen Betrieb**

(30) Priorität: 12.11.2010 CH 18992010
(71) Anmelder: V-Zug AG, 6301 Zug (CH)
(72) Erfinder: Kerschdorfer, Markus, 5643 Sins (CH); Widmer, André, 5643 Sins (CH)
(74) Vertreter: Sutter, Kurt

(57) **Zusammenfassung**

In einem Wäschetrockner mit Trockenluftkreislauf (3) kann der Volumenstrom der Trockenluft variiert werden. Insbesondere kann der Volumenstrom bei zunehmender Trocknung reduziert werden, so dass die Luft weiterhin eine relativ hohe Feuchte besitzt und ihr effizient Wasser entzogen werden kann. Auch können dem Benutzer Programme mit unterschiedlichen Volumenströmen und Prozessdauern zur Verfügung gestellt werden, so dass Dauer, Wärme- und Energieverbauch sowie Lärmentwicklung entsprechend den jeweiligen Anforderungen gewählt werden können. Vorteilhaft wird die Leistung einer im Gerät angeordneten Wärmepumpe (7) abhängig vom Volumenstrom eingestellt.

## Beschreibung

### Gebiet der Erfindung

Die Erfindung betrifft einen Wäschetrockner mit einem Trockenluftkreislauf, einer im Trockenluftkreislauf liegenden Trommel zur Aufnahme von zu trocknender Wäsche, Luftfördermitteln zum Erzeugen eines Volumenstroms von Trockenluft im Trockenluftkreislauf und einer Steuerung zum Steuern der Luftfördermittel. Weiter betrifft die Erfindung ein Verfahren zum Betrieb eines solchen Wäschetrockners.

### Hintergrund

Bei bekannten Wäschetrocknern wird die Trockenluft in einem Trockenluftkreislauf durch die Trommel gefördert, wodurch die Wäsche getrocknet wird. Ein hoher Luftstrom ist dabei für eine bessere Trockenleistung zwar sinnvoll, er ist aber mit grossem Energieverbrauch und beträchtlicher Lärmentwicklung verbunden.

### Darstellung der Erfindung

Es stellt sich die Aufgabe, einen Wäschetrockner und ein Verfahren zu dessen Betrieb bereitzustellen, die dieser Problematik Rechnung tragen. Diese Aufgabe wird von den unabhängigen Ansprüchen erfüllt.

Demgemäss ist die Steuerung des Wäschetrockners dazu ausgestaltet ist, mindestens zwei unterschiedliche Volumenströme im Trockenluftkreislauf zu erzeugen, und gemäss Verfahren werden im Trockenluftkreislauf zeitlich versetzt, d.h. nacheinander, mindestens zwei unterschiedliche Volumenströme erzeugt. Dadurch wird es möglich, den Volumenstrom an die jeweiligen Bedürfnisse besser anzupassen.

Unter dem Begriff "mindestens zwei unterschiedliche Volumenströme" sind dabei zwei unterschiedliche Volumenströme ungleich Null zu verstehen, d.h. stehende Trockenluft wird nicht als Volumenstrom im Sinne des Anspruchs verstanden.

Insbesondere wird dabei der Volumenstrom innerhalb eines einzelnen Trocknungsprozesses geändert, d.h. variiert.

Beispielsweise kann der Volumenstrom in einer Anfangsphase des Trocknungsprozesses höher eingestellt werden als in einer Endphase desselben. Dabei wird dem Umstand Rechnung getragen, dass gegen Ende des Trocknungsprozesses die Wäsche trockener ist als am Anfang des Prozesses, und dass deshalb der Feuchtegrad der Luft gegen Prozessende hin grundsätzlich abnimmt, was einen Wasserentzug aus der Trockenluft erschwert. Wird der Volumenstrom gegen Prozessende jedoch reduziert, so kann dieser Abnahme von Feuchte entgegengewirkt werden, so dass die Trockenluft weiterhin mit hoher Effizienz getrocknet werden kann.

Aus dem gleichen Grund wird in einer anderen bevorzugten Ausführung die Feuchte der Wäsche oder der Trockenluft mit einem Feuchtesensor gemessen und der Volumenstrom wird bei abnehmender Feuchte reduziert.

Ist der Wäschetrockner mit einer Wärmepumpe ausgestattet, welche ein Kühlaggregat und ein Heizaggregat im Trockenluftkreislauf aufweist, um so der Trockenluft Wasser zu entziehen und Wärme zuzuführen, so wird die Leistung der Wärmepumpe vorzugsweise abhängig vom Volumenstrom eingestellt. Insbesondere kann die Leistung der Wärmepumpe mit abnehmendem Volumenstrom reduziert werden. Auf diese Weise können der Lärm reduziert und der Energieverbrauch optimiert werden.

Weiter kann der Wäschetrockner in bekannter Weise eine Programmwahl aufweisen, über welche der Benutzer eines von mehreren Trocknungsprogrammen mit unterschiedlichen Betriebsparametern anwählen kann. Dabei sind mindestens zwei Trocknungsprogramme vorgesehen, in welchen die Trockenluft mit unterschiedlichen Volumenströmen gefördert wird. So kann ein erstes Trocknungsprogramm vorgesehen sein, welches einen tieferen Volumenstrom erzeugt als ein zweites Trocknungsprogramm. Das erste Trocknungsprogramm kann dabei z.B. als Energie sparendes und lärmreduziertes Nachtprogramm eingesetzt werden und dauert vorzugsweise länger.

### Kurze Beschreibung der Zeichnung

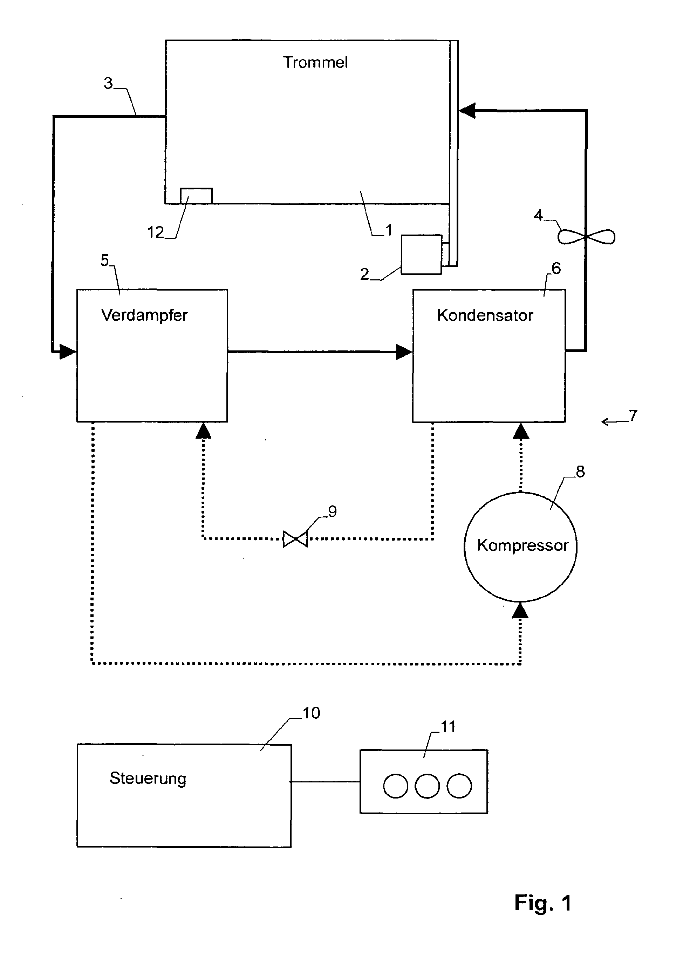

Weitere Ausgestaltungen, Vorteile und Anwendungen der Erfindung ergeben sich aus den abhängigen Ansprüchen und aus der nun folgenden Beschreibung anhand beiliegenden Fig. 1, welche schematisch einige Komponenten eines Wäschetrockners zeigt.

### Wege zur Ausführung der Erfindung

Der Wäschetrockner gemäss beiliegender Figur besitzt eine Trommel 1 zur Aufnahme der zu trocknenden Wäsche. Die Trommel 1 wird von einem Antrieb 2 zur Drehung angetrieben, vorzugsweise zu einer reversierenden Drehung, d.h. einer Drehung, bei welcher der Drehsinn der Drehung in einem Reversierrhythmus intervallweise geändert wird, um die Gefahr eines Verwickelns der Wäsche zu reduzieren.

Die Trommel 1 ist in einem Trockenluftkreislauf 3 angeordnet. In der vorliegenden Ausführung handelt es sich dabei um einen geschlossenen Trockenluftkreislauf, auch wenn die Erfindung grundsätzlich auch mit einem Trockenluftkreislauf eingesetzt werden kann, in welchem ein Teil der Trockenluft zumindest zeitweise durch Frischluft ersetzt wird.

Um die Luft durch den Trockenluftkreislauf 3 zu fördern, sind Luftfördermittel in Form eines Ventilators 4 vorgesehen. Vom Ventilator 4 gelangt die Trockenluft in die Trommel 1 und von dort durch einen Verdampfer 5 und einen Kondenstor 6 einer Wärmepumpe 7 zurück zum Ventilator 4.

Die Wärmepumpe 7 umfasst einen Kompressor 8, welcher ein Wärmepumpenmedium in bekannter Weise durch den Kondensator 6, ein Expansionsventil 9 und den Verdampfer 5 fördert, so dass der Kondensator 6 als Heizung und der Verdampfer 5 als Kühlung für die Trockenluft im Trockenluftkreislauf 3 wirkt. Damit wird der Trockenluft am Ort des Verdampfers 5 Feuchte entzogen und am Ort des Kondensators 6 Wärme zugeführt.

Der Betrieb des Geräts wird von einer Steuerung 10 gesteuert. An der Steuerung 10 ist eine Programmwahl 11 angeordnet, über welche der Benutzer in an sich bekannter Weise eines von mehreren Trocknungsprogrammen mit unterschiedlichen Betriebsparametern anwählen kann.

Die Steuerung 10 steuert einen Trocknungsprozess durch Ansteuerung der verschiedenen Komponenten des Geräts, so insbesondere des Antriebs 2 der Trommel, des Kompressors 8 und des Ventilators 4.

Wie eingangs erwähnt, kann auf diese Weise insbesondere der Volumenstrom im Trockenluft 3 variiert werden. Hierzu werden im Folgenden einige Beispiele beschrieben:

### Reduktion des Volumenstroms mit zunehmender Trockung

In einer besonders vorteilhaften Ausführung wird der Volumenstrom im Trockenluftkreislauf mit zunehmender Trockenheit von Trockenluft und Wäsche reduziert. Dem liegt die Erkenntnis zugrunde, dass die Effizienz des Wasserentzugs aus der Trockenluft abnimmt, wenn die Feuchte der Trockenluft sinkt. Deshalb wird, wenn der Feuchtegehalt in der Luft oder Wäsche abnimmt, der Volumenstrom vorteilhaft reduziert, so dass der Trockenluft in der Trommel mehr Zeit zur Aufnahme von Wasser bleibt.

Hierzu kann, in einer ersten Ausführung, ein Feuchtesensor 12 vorgesehen sein, der die Feuchte der Wäsche oder der Trockenluft misst. Beim Feuchtesensor 12 kann es sich z.B. um einen Leitfähigkeitssensor handeln, der die Leitfähigkeit der Wäsche in der Trommel 1 misst, oder es kann sich um einen Feuchte-Gassensor handeln, der die Feuchte in der Trockenluft misst. Stellt die Steuerung 10 fest, dass die Feuchte abnimmt, so wird der Volumenstrom im Trockenluftkreislauf automatisch auf einen tieferen Wert reduziert.

In einer zweiten Ausführung ist aber auch eine rein zeitgesteuerte Wahl des Volumenstroms denkbar, indem die Steuerung 10 in der Anfangsphase eines Trocknungsprozesses den Ventilator 4 mit höherer Drehzahl laufen lässt als gegen Schluss des Prozesses. Beispielsweise kann der Ventilator in den ersten 60 Minuten eines Trocknungsprozesses mit höherer Drehzahl betrieben werden als in der daran anschliessenden Endphase (oder umgekehrt).

Die Reduktion des Volumenstroms bzw. der Drehzahl des Ventilators 4 kann dabei in mindestens einer Stufe erfolgen oder stufenlos und kontinuierlich.

### Spezialprogramm mit reduziertem Volumenstrom

In einer anderen vorteilhaften Ausführung können verschiedene Trocknungsprogramme vorgesehen sein, welche sich durch den verwendeten Volumenstrom unterscheiden. Insbesondere kann mindestens ein Programm mit reduziertem Volumenstrom vorgesehen sein, bei welchem der Ventilator 4 mindestens teilweise, vorzugsweise über den ganzen Programmablauf, mit tieferer Drehzahl betrieben wird als während mindestens einem anderen (normalen) Programm. Um die mit dem reduzierten Volumenstrom einhergehende reduzierte Trocknungsrate zu kompensieren, dauert dabei das Programm mit reduziertem Volumenstrom vorzugsweise länger als ein normales Programm.

Ein Spezialprogramm dieser Art kann z.B. vorzugsweise in der Nacht eingesetzt werden, da in diesem Falle die Programmdauer eine untergeordnete Rolle spielt.

### Anpassung der Trommeldrehung an den Volumenstrom

In einer weiteren vorteilhaften Ausführung ist die Steuerung 10 dazu ausgestaltet, den Drehantrieb 2 der Trommel 1 abhängig vom Volumenstrom zu betrieben. Insbesondere kann die Drehgeschwindigkeit und/oder der Reversierrhythmus der Trommel abhängig vom Volumenstrom der Trockenluft eingestellt werden. So kann z.B. die Drehgeschwindigkeit bei geringerem Volumenstrom reduziert werden, z.B. im oben beschriebenen "Spezialprogramm mit reduziertem Volumenstrom", wodurch Energiebedarf und Lärmerzeugung weiter verringert werden können.

### Anpassung der Wärmepumpenleistung an den Volumenstrom

Es ist von Vorteil, die Leistung der Wärmepumpe 7 abhängig vom Volumenstrom einzustellen. Bei Betrieb mit tieferem Volumenstrom kann auch die Leistung der Wärmepumpe 7 tiefer sein als bei Betrieb mit höherem Volumenstrom. Hierdurch wird wiederum eine Energieeinsparung sowie eine Lärmreduktion erzielt.

Vorzugsweise ist deshalb der Motor des Kompressors als "brushless DC" (BLDC) Motor ausgestaltet, dessen Drehzahl in einfacher Weise variiert werden kann. Denkbar ist jedoch auch ein gepulster Betrieb des Motors.

### Bemerkun gen

Die oben genannten Beispiele für Verfahren bzw. Programme, in denen der Volumenstrom variiert wird, können einzeln oder in beliebiger Kombination eingesetzt werden.

Die Grösse der Variation des Volumenstroms hängt unter anderem von der Gerätegrösse und der jeweiligen Anwendung ab. Bei einem Gerät mit einem Trommelvolumen von ca. 110 Litern kann z.B. der normale Volumenstrom (beispielsweise in der oben erwähnten "Anfangsphase" eines Trockenprogramms oder im oben erwähnten "normalen Programm") ca. 250 m³/h betragen, während der reduzierte Volumenstrom (z.B. in der oben erwähnten "Endphase" eines Trockenprogramms oder im oben erwähnten "Programm mit reduziertem Volumenstrom") beispielsweise ca. 150 m³/h beträgt.

Denkbar ist es auch, den Volumenstrom temporär oder in gewissen Programmen gezielt zu erhöhen, z.B. um eine besonders schnelle Trocknung zu erreichen.

Zusammenfassend kann also in einem Wäschetrockner mit Trockenluftkreislauf 3 der Volumenstrom der Trockenluft variiert werden. Insbesondere kann der Volumenstrom bei zunehmender Trocknung reduziert werden, so dass die Trockenluft weiterhin eine relativ hohe Feuchte besitzt und ihr deshalb effizient Wasser entzogen werden kann. Auch können dem Benutzer Programme mit unterschiedlichen Volumenströmen und Prozessdauern zur Verfügung gestellt werden, so dass Dauer, Wärme- und Energieverbauch sowie Lärmentwicklung entsprechend den jeweiligen Anforderungen optimal gewählt werden können. Vorteilhaft wird die Leistung der Wärmepumpe 7 des Wäschetrockners abhängig vom Volumenstrom eingestellt.

## Patentansprüche

1. Wäschetrockner mit
einem Trockenluftkreislauf (3),
einer im Trockenluftkreislauf (3) liegenden Trommel (1) zur Aufnahme von zu trocknender Wäsche,
Luftfördermitteln (4) zum Erzeugen eines Volumenstroms von Trockenluft im Trockenluftkreislauf (3) und
einer Steuerung (10) zum Steuern der Luftfördermittel,
**dadurch gekennzeichnet, dass** die Steuerung (10) dazu ausgestaltet ist, mindestens zwei unterschiedliche Volumenströme ungleich Null im Trockenluftkreislauf (3) zu erzeugen.

2. Wäschetrockner nach Anspruch 1, wobei die Steuerung (10) dazu ausgestaltet ist, innerhalb eines Trocknungsprozesses den Volumenstroms zu ändern.

3. Wäschetrockner nach Anspruch 2, wobei die Steuerung (10) dazu ausgestaltet ist, den Volumenstrom in einer Anfangsphase des Trocknungsprozesses höher einzustellen als in einer Endphase des Trocknungsprozesses.

4. Wäschetrockner nach einem der vorangehenden Ansprüche, wobei der Wäschetrockner mindestens einen Feuchtesensor (12) zum Messen einer Feuchte der Wäsche oder der Trockenluft aufweist, wobei die Steuerung (10) dazu ausgestaltet ist, den Volumenstrom bei abnehmender Feuchte zu reduzieren.

5. Wäschetrockner nach einem der vorangehenden Ansprüche, wobei der Wäschetrockner eine Programmwahl (11) aufweist, über welche durch den Benutzer eines von mehreren Trocknungsprogrammen mit unterschiedlichen Betriebsparametern anwählbar ist, wobei die Steuerung (10) bei Anwahl eines Ersten der Trocknungsprogramme einen tieferen Volumenstrom erzeugt als bei Anwahl eines Zweiten der Trocknungsprogramme.

6. Wäschetrockner nach Anspruch 5, wobei das erste Trocknungsprogramm länger dauert als das zweite Trocknungsprogramm.

7. Wäschetrockner nach einem der vorangehenden Ansprüche, wobei der Wäschetrockner eine Wärmepumpe (7) aufweist, wobei ein Verdampfer (5) und ein Kondensator (6) der Wärmepumpe (7) im Trockenluftkreislauf (3) angeordnet sind, und wobei die Steuerung (10) dazu ausgestaltet ist, eine Leistung der Wärmepumpe (7) abhängig vom Volumenstrom einzustellen.

8. Wäschetrockner nach einem der vorangehenden Ansprüche, wobei der Wäschetrockner einen Drehantrieb (2) für die Trommel (1) aufweist, wobei die Steuerung (10) dazu ausgestaltet ist, eine Drehgeschwindigkeit und/oder einen Reversierrhythmus der Trommel (1) abhängig vom Volumenstrom einzustellen.

9. Verfahren zum Betrieb eines Wäschetrockners nach einem der vorangehenden Ansprüche, wobei im Trockenluftkreislauf (3) zeitlich versetzt mindestens zwei unterschiedliche Volumenströme grösser Null erzeugt werden.

10. Verfahren nach Anspruch 9, wobei der Volumenstrom in einer Anfangsphase eines Trocknungsprozesses höher ist als in einer Endphase desselben Trocknungsprozesses.

11. Verfahren nach einem der Ansprüche 9 oder 10, wobei eine Feuchte der zu trocknenden Wäsche und/oder der Trockenluft gemessen wird und der Volumenstrom in einem Trocknungsprozess bei abnehmender Feuchte reduziert wird.

12. Verfahren nach einem der Ansprüche 9 bis 11, wobei der Wäschetrockner eine Wärmepumpe (7) aufweist, wobei ein Kühlaggregat und ein Heizaggregat der Wärmepumpe im Trockenluftkreislauf (3) angeordnet sind, und wobei eine Leistung der Wärmepumpe (7) mit abnehmendem Volumenstrom reduziert wird.
